# EUROPEAN PATENT APPLICATION

(11) **EP 4 550 545 A1**
(43) Date of publication of application: **07.05.2025**
(21) Application number: 23838584.3
(22) Date of filing: 05.06.2023
(51) Int. Cl.: H01M 50/244, H01M 50/209, H01M 50/233, H01M 50/103, H01M 50/289

(54) **ENERGE STORAGE BATTERY CABINET AND ENERGY STORAGE SYSTEM HAVING SAME**

(30) Priority: 15.07.2022 CN 202221841014 U; 15.07.2022 CN 202210833929
(71) Applicant: BYD Company Limited, Shenzhen, Guangdong 518118 (CN)
(72) Inventor: SUI, Jiahai, Shenzhen, Guangdong 518118 (CN); YIN, Xueqin, Shenzhen, Guangdong 518118 (CN); CAO, Hu, Shenzhen, Guangdong 518118 (CN); LIU, Weijie, Shenzhen, Guangdong 518118 (CN); YIN, Xiaoqiang, Shenzhen, Guangdong 518118 (CN)
(74) Representative: Taor, Simon Edward William
(86) International application number: PCT/CN2023/098232
(87) International publication number: WO 2024/012090

(57) **Abstract**

An energy storage system is provided with an energy storage battery cabinet. The energy storage battery cabinet comprises a cabinet body and at least two battery cell layer groups. The cabinet body has a first direction, a second direction and a third direction which are orthogonal to each other. The at least two battery cell layers are provided in the cabinet body and arranged in the third direction. Each of the battery cell layer groups comprises at least one battery cell in each of the first direction and the second direction. Two adjacent battery cell layer groups in the third direction abut against each other so as to limit each other in the third direction.

## Description

### CROSS-REFERENCE TO RELATED APPLICATIONS

The present disclosure claims priority to and benefits of Chinese Patent Application No. 202221841014.2, entitled "ENERGE STORAGE BATTERY CABINET AND ENERGY STORAGE SYSTEM HAVING SAME" and filed on July 15, 2022, and Chinese Patent Application No. 202210833929.7, entitled "ENERGE STORAGE BATTERY CABINET AND ENERGY STORAGE SYSTEM HAVING SAME" and filed on July 15, 2022. The entire content of the above-referenced applications is incorporated herein by reference.

### FIELD

The present disclosure relates to the technical field of energy storage, and more specifically, to an energy storage battery cabinet and an energy storage system having same.

### BACKGROUND

In the related art, a battery pack is usually placed in an energy storage cabinet, multiple battery modules are provided in the battery pack, and multiple battery cells are provided in each battery module. By such the design, both the battery pack and the battery modules have housings and other structures. The battery cells form the battery modules through module structural parts, and the battery modules form the battery pack through a package structural part. In this way, a volumetric cell to system rate (Volumetric Cell To System, VCTS) is degraded twice. A volume utilization rate of the battery cells in the energy storage cabinet is reduced. For example, the volume utilization rate of battery cells is usually lower than 28%, resulting in a low energy density.

### SUMMARY

The present disclosure aims to resolve at least one of the technical problems in the related art. To this end, an objective of the present disclosure is to provide an energy storage system. Battery cell layer groups of the energy storage battery cabinet are stacked, to cause that the battery cell layer groups are mutually limited, thereby having advantages of a high energy density, a large volumetric cell to system rate, and the like.

The present disclosure further provides an energy storage system having the above energy storage battery cabinet.

In order to achieve the above objective, an embodiment of a first aspect of the present disclosure provides an energy storage battery cabinet, including: a cabinet body, the cabinet body having a first direction, a second direction, and a third direction which are orthogonal to each other; and at least two battery cell layer groups, the at least two battery cell layer groups being provided in the cabinet body and arranged along the third direction, each battery cell layer group including at least one battery cell in each direction of the first direction and the second direction, and two adjacent battery cell layer groups in the third direction abutting against each other so as to limit each other in the third direction.

Battery cell layer groups of the energy storage battery cabinet according to this embodiment of the present disclosure are stacked, to cause that the battery cell layer groups are mutually limited, thereby having advantages of a high energy density, a large volumetric cell to system rate, and the like.

According to some embodiments of the present disclosure, the at least two battery cell layer groups are integrally supported by being in contact with the cabinet body at one side in the third direction.

According to some embodiments of the present disclosure, the first direction is a width direction of the cabinet body, the second direction is a depth direction of the cabinet body, and the third direction is a height direction of the cabinet body.

According to some embodiments of the present disclosure, length directions of the battery cells are arranged along the first direction, thickness directions of the battery cells are arranged along the second direction, and width directions of the battery cells are arranged along the third direction.

According to some embodiments of the present disclosure, a number X of the battery cells in the first direction satisfies: 1 ≤ X ≤ 2. A number Y of the battery cells arranged in the second direction satisfies: 1 < Y ≤ 26. A number Z of the battery cells arranged in the third direction satisfies: 1 ≤ Z ≤ 16.

According to some embodiments of the present disclosure, a length of each battery cell is L, a thickness of the battery cell is D, and a width of the battery cell is H, where (D+H)/L ≤ 0.2.

According to some embodiments of the present disclosure, the length of each battery cell is L, the thickness of the battery cell is D, and the width of the battery cell is H, where 400 mm ≤ L ≤ 1200 mm, 10 mm ≤ D ≤ 40 mm, and 60 mm ≤ H ≤ 150 mm.

According to some embodiments of the present disclosure, the length of each battery cell is L, the thickness of the battery cell is D, and the width of the battery cell is H, where 800 mm ≤ L ≤ 970 mm, 10 mm ≤ D ≤ 30 mm, and 80 mm ≤ H ≤ 130 mm.

According to some embodiments of the present disclosure, the length of each battery cell is L, the thickness of the battery cell is D, and the width of the battery cell is H. A width of the cabinet body is W1, a depth of the cabinet body is D1, and a height of the cabinet body is H1, where 0.5 ≤ L/W1 < 1; and/or 0.5 ≤ L/D1 < 1.

According to some embodiments of the present disclosure, the width of the cabinet body is W1, the depth of the cabinet body is D1, and the height of the cabinet body is H1, where 600 mm ≤ W1 ≤ 1200 mm, 700 mm ≤ D1 ≤ 1250 mm, and 600 ≤ H1 ≤ 2600 mm.

According to some embodiments of the present disclosure, battery cells of the two adjacent battery cell layer groups in the third direction abut against each other.

According to some embodiments of the present disclosure, an air duct gap is provided between the battery cells of the two adjacent battery cell layer groups in the third direction.

According to some embodiments of the present disclosure, a size of the air duct gap in the third direction ranges from 5 mm to 20 mm.

According to some embodiments of the present disclosure, a number of the battery cell layer groups ranges from 2 to 8.

According to some embodiments of the present disclosure, the at least two battery cell layer groups arranged in the third direction define an overall width of W2, an overall depth of D2, and an overall height of H2, where 500 mm ≤ W2 ≤ 1100 mm, 450 mm ≤ D2 ≤ 1000 mm, and 450 mm ≤ H2 ≤ 2450 mm.

According to some embodiments of the present disclosure, battery cells of the two adjacent battery cell layer groups in the third direction abut against each other.

According to some embodiments of the present disclosure, each battery cell layer group further includes: a restraint frame. Battery cells in each battery cell layer groups are arranged in the restraint frame. Restraint frames of the two adjacent battery cell layer groups in the third direction abut against each other.

According to some embodiments of the present disclosure, the restraint frame includes: a first bottom plate and a second bottom plate. The first bottom plate and the second bottom plate are arranged spaced away along one of the first direction and the second direction. Two ends of the battery cells in the length direction are respectively supported on the first bottom plate and the second bottom plate. An air duct gap is formed between the first bottom plate and the second bottom plate.

According to some embodiments of the present disclosure, the restraint frame further includes: a first side plate and a second side plate. The first side plate and the second side plate are respectively located at two sides of the battery cell layer group. The first side plate and the second side plate are arranged opposite to each other in the first direction and the second direction. Two ends of the first bottom plate are respectively connected to one end of the first side plate and one end of the second side plate. Two ends of the second bottom plate are respectively connected to the other end of the first side plate and the other end of the second side plate. For two adjacent battery cell layer groups in the third direction, the first bottom plate of one battery cell layer group abuts against the first side plate and the second side plate of the other battery cell layer group, and the second bottom plate of the one battery cell layer group abuts against the first side plate and the second side plate of the other battery cell layer group.

According to some embodiments of the present disclosure, each of the first bottom plate and the second bottom plate is provided with one of a limit bar and a limit hole. Each of the first side plate and the second side plate is provided with the other one of the limit bar and the limit hole. For the two adjacent battery cell layer groups in the third direction, the limit bar of one battery cell layer group is matched with the limit hole of the other battery cell layer group.

According to some embodiments of the present disclosure, either the limit bars or the limit holes are distributed at two ends of the first bottom plate and two ends of the second bottom plate. The other one of the limit bars and the limit holes are distributed at two ends of the first side plate and two ends of the second side plate.

According to some embodiments of the present disclosure, for two adjacent battery cell layer groups in the third direction, the first side plate of the other battery cell layer group is fastened to the first bottom plate and the second bottom plate of the one battery cell layer group by first fasteners, and the second side plate of the other battery cell layer group is fastened to the first bottom plate and the second bottom plate of the one battery cell layer group by second fasteners.

According to some embodiments of the present disclosure, the first fasteners are distributed at two ends of the first side plate. The second fasteners are distributed at two ends of the second side plate.

According to some embodiments of the present disclosure, a volume of each battery cell is V1, a number of the battery cells is N, and a volume of the cabinet body is V3, where 35% < (N*V1)/V3 ≤ 50%.

According to some embodiments of the present disclosure, each battery cell layer group further includes: a third bottom plate and a fourth bottom plate. The third bottom plate and a fourth bottom plate are arranged spaced away along one of the first direction and the second direction. For the two adjacent battery cell layer groups in the third direction, the third bottom plate and the fourth bottom plate of one battery cell layer group abut against battery cells of the other battery cell layer group. An air duct gap is formed between the third bottom plate and the fourth bottom plate.

According to some embodiments of the present disclosure, at least one restraint band is provided on one side of the at least two battery cell layer groups in the third direction. Two ends of each restraint band are respectively connected to pull rods. Each pull rod and the cabinet body are connected to the other side of the at least two battery cell layer groups in the third direction.

According to some embodiments of the present disclosure, a volume of each battery cell is V1, a number of the battery cells is N, and a volume of the cabinet body is V3, where 35% < (N*V1)/V3 ≤ 50%.

According to some embodiments of the present disclosure, the energy storage battery cabinet further includes: a refrigeration unit. The refrigeration unit is installed in the cabinet body and located at one side of the cabinet body in the second direction. The refrigeration unit is provided with an air outlet and a return air inlet. A side of the cabinet body in the third direction is configured with a heat dissipation air duct communicated with the air outlet. An air duct gap is provided between the battery cells of the two adjacent battery cell layer groups in the third direction. An airflow flows into the heat dissipation air duct from the air outlet, then flows through the at least two battery cell layer groups from the other side in the second direction and two sides in the first direction, and flows to the return air inlet through the air duct gap.

According to some embodiments of the present disclosure, the cabinet body is provided with a wiring compartment, a first cabinet door, and a second cabinet door on one side of the cabinet body in the second direction. The cabinet body is provided with a third cabinet door on the other side of the cabinet body in the second direction. The energy storage battery cabinet further includes a refrigeration unit and a control unit. Both the refrigeration unit and the control unit are installed in the cabinet body. The refrigeration unit is installed on the first cabinet door. The control unit is exposed by opening the first cabinet door. The second cabinet door is configured to open and close the wiring compartment. The at least two battery cell layer groups are put in or taken out from the cabinet body by opening the third cabinet door.

According to some embodiments of the present disclosure, the first cabinet door and the second cabinet door are arranged along the first direction. The refrigeration unit and the control unit are arranged along the first direction.

According to an embodiment in a second aspect of the present disclosure, an energy storage system is provided, including at least one energy storage battery cabinet according to the embodiment of the first aspect of the present disclosure.

According to the energy storage system of the embodiment of the second aspect of the present disclosure, by using the energy storage battery cabinet according to the embodiment of the first aspect of the present disclosure, battery cell layer groups are stacked, to cause that the battery cell layer groups are mutually limited, thereby having advantages of a high energy density, a large volumetric cell to system rate, and the like.

The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where:
FIG. 1 is a schematic structural diagram of an energy storage battery cabinet according to an embodiment of the disclosure;
FIG. 2 is a schematic structural diagram of a battery cell layer group having a restraint frame according to an embodiment of the present disclosure.
FIG. 3 is a partially enlarged view of a region D in FIG. 2;
FIG. 4 is a schematic structural diagram of a battery cell layer group having a restraint band according to an embodiment of the present disclosure.
FIG. 5 is a partially enlarged view of a region E in FIG. 4;
FIG. 6 is a schematic structural diagram of a restraint frame according to an embodiment of the present disclosure;
FIG. 7 is a schematic structural diagram of an energy storage system according to an embodiment of the present disclosure;
FIG. 8 is a schematic structural diagram of an energy storage system with a cabinet door being in a closed state according to an embodiment of the present disclosure;
FIG. 9 is a schematic structural diagram of an energy storage system with a cabinet door being in an open state according to an embodiment of the present disclosure;
FIG. 10 is a schematic structural diagram of a cabinet door of an energy storage system according to an embodiment of the present disclosure; and
FIG. 11 is a schematic structural diagram of a battery cell according to an embodiment of the present disclosure.

In the drawings:
energy storage battery cabinet 1, energy storage system 2,
cabinet body 100, air duct gap 110, heat dissipation air duct 120, wiring compartment 130, first cabinet door 140, second cabinet door 150, third cabinet door 160,
battery cell layer group 200, battery cell 210,
restraint frame 220, first side plate 221, second side plate 222, first bottom plate 223, second bottom plate 224, stop step 225,
limit bar 310, limit hole 320, first fastener 330, second fastener 340,
restraint band 500, pull rod 510, third bottom plate 520, fourth bottom plate 530,
refrigeration unit 600, control unit 700.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are merely intended to explain the present disclosure and cannot be construed as a limitation to the present disclosure.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation. Therefore, such terms should not be construed as limiting of the present disclosure.

In the description of the present disclosure, "a number of" means two or more than two, and "several" means one or more.

An energy storage battery cabinet 1 according to an embodiment of the present application is described with reference to accompanying drawings.

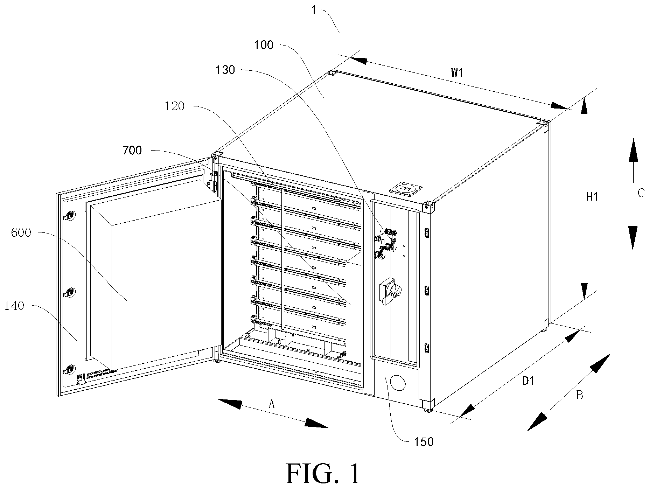

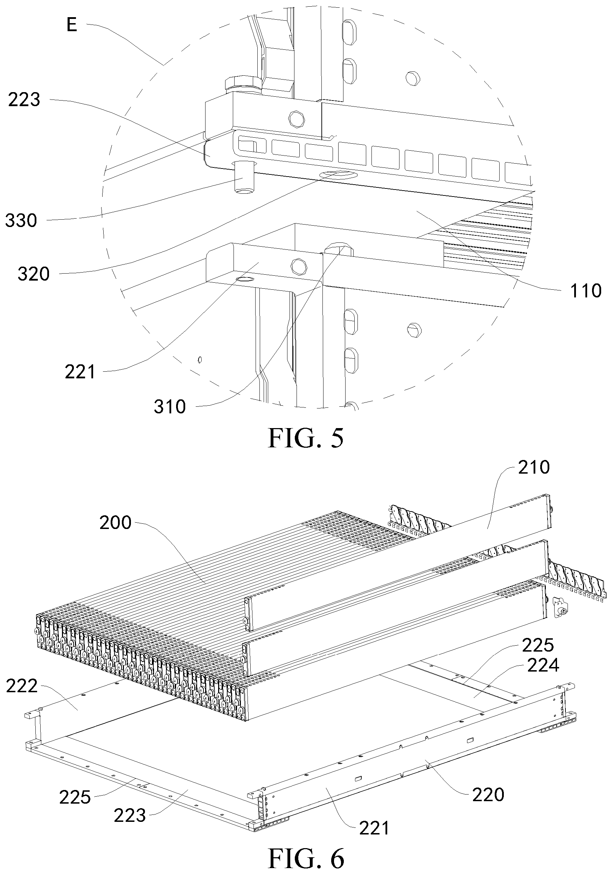

As shown in FIG. 1 to FIG. 10, the energy storage battery cabinet 1 according to this embodiment of the present disclosure includes a cabinet body 100 and at least two battery cell layer groups 200.

The cabinet body 100 has a first direction (a direction indicated by an arrow A), a second direction (a direction indicated by an arrow B), and a third direction (a direction indicated by an arrow C) which are orthogonal to each other. The at least two battery cell layer groups 200 are disposed in the cabinet body 100 and arranged along the third direction. In other words, in the third direction, at least two battery cell layer groups 200 are arranged sequentially. Or, more battery cell layer groups 200 are arranged sequentially along the third direction. In this way, an overall size of the at least two battery cell layer groups 200 in the third direction is closer to the size of the cabinet body 100 in the third direction. The battery cell layer groups 200 can fill up the cabinet body 100 in the third direction. The cabinet body 100 can accommodate more battery cell layer groups 200. In addition, the cabinet body 100 has the first direction, the second direction, and the third direction which are orthogonal to each other, the cabinet body 100 can be a rectangular paralleloid. In this way, the battery cell layer groups 200 are conveniently accommodated, to cause that the battery cell layer groups 200 can fit or keep a relatively close distance with side walls of the cabinet body 100. A gap between the battery cell layer groups 200 and the cabinet body 100 is prevented from being excessively large, thereby improving the arrangement density of the battery cell layer groups 200 in the cabinet body 100 and improving the volume utilization rate of the battery cells 210.

Each battery cell layer group 200 includes at least one battery cell 210 in each of the first direction and the second direction. For example, each battery cell layer group 200 may be provided with multiple battery cells 210, and the size of the battery cell layer group 200 in the first direction and the size in the second direction may be adjusted according to a number of the battery cells 210, to cause that the size of the battery cell layer group 200 in the first direction can be closer to the size of the cabinet body 100 in the first direction, the size of the battery cell layer groups 200 in the second direction can be closer to the size of the cabinet body 100 in the second direction, and the cabinet body 100 can accommodate more battery cells 210. Moreover, the number of battery cells 210 arranged in the battery cell layer group 200 does not affect the size of the battery cell layer group 200 in the third direction, which facilitates arrangement of battery cell layer groups 200, and further improves the volume utilization rate of the battery cells 210.

Two adjacent battery cell layer groups 200 in the third direction abut against each other so as to limit each other in the third direction.

The energy storage battery cabinet 1 can satisfy the use requirements of industrial and commercial energy storage and household energy storage.

According to the energy storage battery cabinet 1 of this embodiment of the present disclosure, the cabinet body 100 has a first direction, a second direction, and a third direction which are orthogonal to each other. At least two battery cell layer groups 200 are provided in the cabinet body 100 and arranged along the third direction. Each battery cell layer group 200 includes at least one battery cell 210 in each of the first direction and the second direction.

**In** other words, the frame in the cabinet body 100 of the energy storage battery cabinet 1 of the present disclosure is composed of multiple battery cell layer groups 200, and the multiple battery cell layer groups 200 are stacked along the third direction. The number of battery cells 210 in each battery cell layer group 200 in the first direction and the second direction is at least 1, to cause that the battery cells 210 fill up the cabinet body 100 as much as possible, thereby improving the space utilization rate of the cabinet body 100 and achieving a high energy density.

In addition, two adjacent battery cell layer groups 200 in the third direction are abutted against each other so as to limit each other in the third direction.

In an actual application of the energy storage battery cabinet 1, the third direction of the cabinet body 100 may be a vertical direction. A bottom surface of each battery cell layer group 200 abuts against a top surface of the battery cell layer group 200 below same. Moreover, under the action of gravity, except for a lowermost battery cell layer group 200, each remaining battery cell layer group 200 is pressed to a lower battery cell layer group 200 adjacent thereto. In this way, the multiple battery cell layer groups 200 are reliably stopped, so that the multiple battery cell layer groups 200 are mutually limited, so as to realize the stable positioning of the multiple battery cell layer groups 200 in the cabinet body 100 and ensure the safety of an electrical connection.

Compared with an energy storage battery cabinet in the related art in which positions of the battery cell layer groups are fixed by arranging a structure such as a bracket or a housing, the energy storage battery cabinet 1 performs position limit by the multiple battery cell layer groups 200, a limit fastening structure does not need to be additionally provided and the number of parts is reduced, to cause that more space in the energy storage battery cabinet 1 can be left for arranging the battery cells 210, and to improve the energy density of the energy storage battery cabinet 1 and the volumetric cell to system rate.

In this way, the battery cell layer groups 200 of the energy storage battery cabinet 1 according to this embodiment of the present disclosure are stacked, to cause that the battery cell layer groups 200 are mutually limited, thereby having advantages of a high energy density, a large volumetric cell to system rate, and the like.

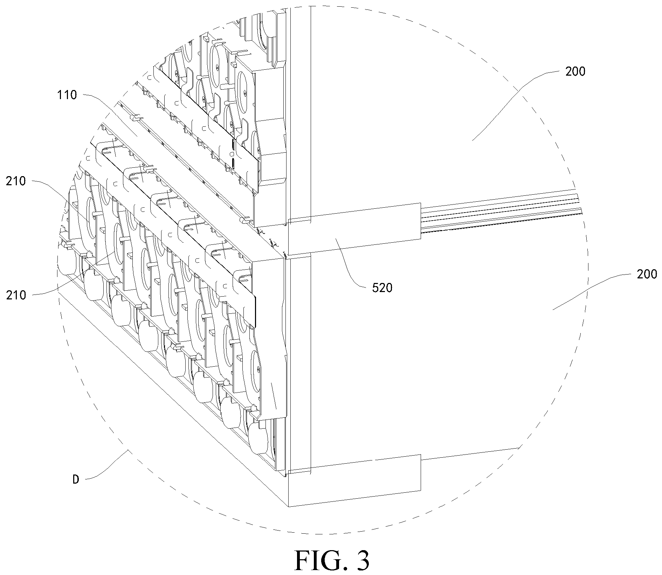

According to some specific embodiments of the present disclosure, as shown in FIG. 1 and FIG. 3, the first direction is a width direction of the cabinet body 100, the second direction is a depth direction of the cabinet body 100, and the third direction is a height direction of the cabinet body 100. That is, the multiple battery cell layer groups 200 are arranged along the height direction of the cabinet body 100. In an application of the energy storage battery cabinet 1, the height direction of the cabinet body 100 is generally a vertical direction. Therefore, each battery cell layer group 200 can be installed on the cabinet body 100 or removed from the cabinet body 100 along a horizontal direction, which conforms to the force exertion habit of a human being and is convenient for a user to operate. In addition, each battery cell layer group 200 may abut against a battery cell layer group 200 below same under the action of gravity, so that the abutting between the multiple battery cell layer groups 200 is reliable and the limiting is stable. The lowermost battery cell layer group 200 may abut against the cabinet body 100. In other words, the at least two battery cell layer groups 200 may be in contact with the cabinet body 100 through one side in the third direction. That is, the cabinet body 100 may be directly in contact with one side of the at least two battery cell layer groups 200 located at the lowermost battery cell layer group in the third direction 200. Further, other battery cell layer groups 200 except for the lowermost battery cell layer groups 200 can be indirectly supported by the cabinet body 100. Therefore, the at least two battery cell layer groups 200 are integrally supported (that is, the cabinet body 100 supports and fastens all of the battery cell layer groups 200), to cause that the arrangement structure of the multiple battery cell layer groups 200 is stable. In short, the battery cell layer groups 200 are stacked and are integrally supported by the cabinet body 100, to cause that the overall position of the multiple battery cell layer groups 200 is kept stable and the multiple battery cell layer groups 200 support each other. Separate configuration of a support structure piece can be omitted, thereby having advantages of a high energy density, a high volumetric cell to system rate, and the like.

According to some specific embodiments of the present disclosure, as shown in FIG. 1 and FIG. 3, length directions of the battery cells 210 are arranged along the first direction, thickness directions of the battery cells 210 are arranged along the second direction, and width directions of the battery cells 210 are arranged along the third direction.

The length of each battery cell 210 is generally greater than the thickness of the battery cell 210 and the width of the battery cell 210. By arranging the lengths of the battery cells 210 along the first direction, the lengths of the battery cells 210 can be approximately the same as the size of the cabinet body 100 in the first direction, to cause that the battery cells 210 can fill up the cabinet body 100 in the first direction as much as possible. In addition, the number of the battery cells 210 in each battery cell layer group 200 arranged in the second direction is determined according to a relationship between the thicknesses of the battery cells 210 and the size of the cabinet body 100 in the second direction, to further cause that the battery cells 210 can fill up the cabinet body 100 in the second direction as much as possible. In this way, the volumetric cell to system rate and the energy density of the energy storage battery cabinet 1 can be improved. In addition, the battery cell layer groups 200 are stacked, to cause that the battery cell layer groups 200 are mutually limited, thereby having advantages of a high energy density, a large volumetric cell to system rate, and the like.

According to some specific embodiments of the present disclosure, a number X of the battery cells 210 in the first direction satisfies: 1 ≤ X ≤ 2. A number Y of the battery cells 210 in the second direction satisfies: 1 < Y ≤ 26. A number Z of the battery cells 210 in the third direction satisfies: 1 ≤ Z ≤ 16.

The number of the battery cells 210 arranged along the first direction may be one or two, to cause that an overall size of the battery cells 210 in the first direction may be substantially the same as the size of the cabinet body 100 in the first direction and that the battery cells 210 fill up the cabinet body 100 in the first direction as much as possible. In addition, the number of the battery cells 210 arranged along the second direction may be 1 to 26, and the overall size of the battery cells 210 in the second direction may be substantially the same as the size of the cabinet body 100 in the second direction, so that the battery cells 210 fill up the cabinet body 100 in the first direction as much as possible. In this way, the volumetric cell to system rate and the energy density of the energy storage battery cabinet 1 can be improved.

In addition, the number of the battery cells 210 arranged in the third direction is not greater than 16, to avoid the situation that the number of the battery cells 210 arranged in the third direction is excessively large and is not easy to fix. Therefore, the installation stability of the battery cells 210 is ensured, the electrical connection is also more reliable, and the safety of the energy storage battery cabinet 1 is improved.

According to some specific embodiments of the present disclosure, as shown in FIG. 1 and FIG. 3, the length of the battery cell 210 is L, the thickness of the battery cell 210 is D, and the width of the battery cell 210 is H, where (D+H)/L ≤ 0.2. In this way, the battery cells 210 are of an elongated structure, the structural strength of the battery cells 210 are high, the amount of electricity stored in the battery cells 210 are large, the limit by each battery cell 210 to another adjacent battery cell layer group 200 is reliable, and the adjacent battery cell layer group 200 can be better supported.

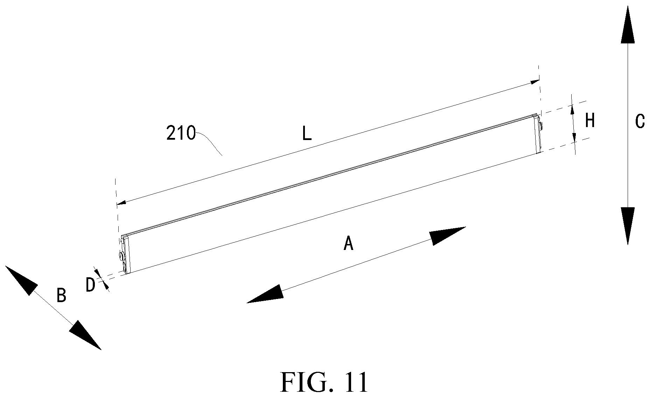

According to some specific embodiments of the present disclosure, as shown in FIG. 11, the length of the battery cell 210 is L, the thickness of the battery cell 210 is D, and the width of the battery cell 210 is H, where 400 mm ≤ L ≤ 1200 mm, 10 mm ≤ D ≤ 40 mm, and 60 mm ≤ H ≤ 150 mm.

A household energy storage battery cabinet 1 generally uses a wall-mounted structure, a battery cell 210 needs to be in a flat form as much as possible, and battery cells 210 on each battery cell layer group 200 also needs to be in a flat form as much as possible after being arranged. In this way, after the energy storage battery cabinet 1 using the above battery cells 210 is hung on a wall, the size of a portion protruding from a wall surface is not prone to exceeding 500 mm, so as to hardly interfere with normal activities of a user in the home, and better satisfy the use requirements of home users.

According to some specific embodiments of the present disclosure, as shown in FIG. 1 and FIG. 3, the length of the battery cell 210 is L, the thickness of the battery cell 210 is D, and the width of the battery cell 210 is H, where 400 mm ≤ L ≤ 970 mm, 10 mm ≤ D ≤ 30 mm, and 80 mm ≤ H ≤ 130 mm. For example, 800 mm ≤ L ≤ 970 mm, 10 mm ≤ D ≤ 30 mm, and 80 mm ≤ H ≤ 130 mm.

The energy storage battery cabinet 1 used in industry and commerce generally requires one battery cell 210 to be arranged in a first direction, and multiple battery cells 210 can be stacked in a second direction and a third direction. In this way, the energy storage battery cabinet 1 using the above battery cells 210 has more stored electricity and stronger power supply capacity, which satisfy the use requirements of industry and commerce.

According to some specific embodiments of the present disclosure, as shown in FIG. 1 and FIG. 11, the length of the battery cell 210 is L, the thickness of the battery cell 210 is D, the width of the battery cell 210 is H, the width of the cabinet body 100 is W1, the depth of the cabinet body 100 is D1, and the height of the cabinet body 100 is H1, where 0.5 ≤ L/W1 < 1.

For example, the width of the cabinet body 100 is a distance between outer surfaces of two sides of the cabinet body 100 in the first direction, the depth of the cabinet body 100 is a distance between outer surfaces of two sides of the cabinet body 100 in the second direction, and the height of the cabinet body 100 is a distance between outer surfaces of two sides of the cabinet body 100 in the third direction.

If the length of the battery cell 210 is half of the width of the cabinet body 100, two battery cells 210 can be arranged in the width direction of the cabinet body 100. If the length of the battery cell 210 is greater than half of the width of the cabinet body 100, the length of the battery cell 210 is closer to the width of the energy storage battery cabinet 1. Therefore the battery cell 210 can occupy at least half of the space of the cabinet body 100 in the width direction of the cabinet body 100, to cause that the volumetric cell to system rate of the energy storage battery cabinet 1 is large and the energy density is high.

In addition, 0.5 ≤ L/D1 < 1. If the length of the battery cell 210 is half of the depth of the cabinet body 100, two battery cells 210 can be arranged in the depth direction of the cabinet body 100. If the length of the battery cell 210 is greater than half of the depth of the cabinet body 100, the length of the battery cell 210 is closer to the depth of the energy storage battery cabinet 1. Therefore, the battery cell 210 can occupy at least more than half of the space of the cabinet body 100 in the depth direction of the cabinet body 100, to cause that the battery cell volume utilization rate of the energy storage battery cabinet 1 is high.

According to some specific embodiments of the present disclosure, as shown in FIG. 1 and FIG. 3, the width of the cabinet body 100 is W1, the depth of the cabinet body 100 is D1, and the height of the cabinet body 100 is H1, where 600 mm ≤ W1 ≤ 1200 mm, 700 mm ≤ D1 ≤ 1250 mm, and 600 ≤ H1 ≤ 2600 mm.

In this way, the size of the energy storage battery cabinet 1 is not excessively large, to cause that the structural strength of the energy storage battery cabinet 1 is ensured, and hoisting is convenient. In addition, the size of the energy storage battery cabinet 1 is not excessively small, to cause that the energy storage battery cabinet 1 has sufficient space for arranging the battery cells 210, and the power supply duration of the energy storage battery cabinet 1 is prolonged.

According to some specific embodiments of the present disclosure, the battery cells 210 of two adjacent battery cell layer groups 200 in the third direction abut against each other. In this way, no protection structure needs to be additionally provided between the battery cells 210, to cause that the number of parts in the energy storage battery cabinet 1, and more space in the energy storage battery cabinet 1 can be left for arranging the battery cells 210, and to achieve the purpose of improving the volumetric cell to system rate and the energy density of the energy storage battery cabinet 1.

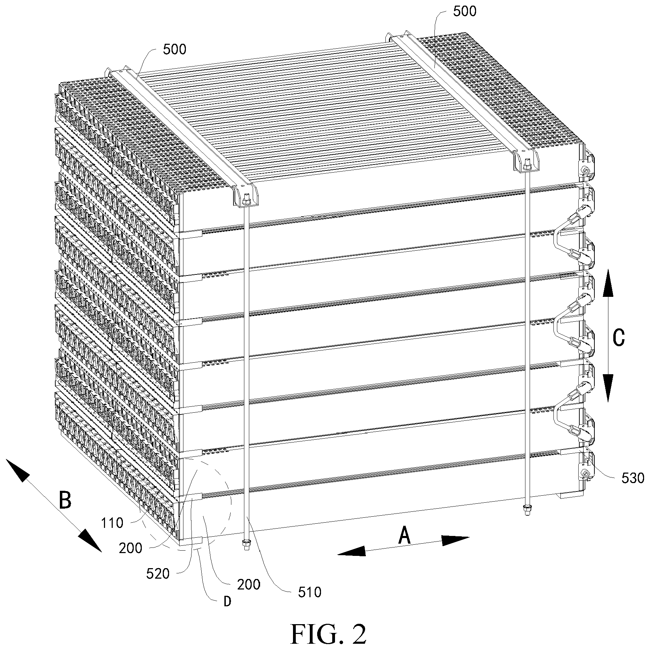

According to some specific embodiments of the present disclosure, as shown in FIG. 2 to FIG. 4, an air duct gap 110 is provided between the battery cells 210 of two adjacent battery cell layer groups 200 in the third direction. In this way, the battery cells 210 of the two adjacent battery cell layer groups 200 do not directly transfer heat to each other, to cause that heat accumulation between the battery cells 210 can be avoided, the battery cells 210 of each battery cell layer group 200 and the energy storage battery cabinet 1 have a larger air heat exchange area, and the heat dissipation capability of the battery cells 210 is improved.

According to some specific embodiments of the present disclosure, as shown in FIG. 2 to FIG. 4, a size of the air duct gap 110 in the third direction ranges from 5 mm to 20 mm. In this way, the distance between the battery cells 210 the two battery cell layer groups 200 is not less than 5 mm, which can facilitate sufficient heat dissipation of the battery cells 210 in each battery cell layer group 200 and avoid thermal runaway caused by heat accumulation. In addition, the distance between the battery cells 210 of the two battery cell layer groups 200 is not greater than 16 mm, to cause that the volumetric cell to system rate and the energy density of the energy storage battery cabinet 1 are ensured.

According to some specific embodiments of the present disclosure, as shown in FIG. 2 to FIG. 4, the number of the battery cell layer groups 200 ranges from 2 to 18. The battery cell layer groups 200 need to support each other, and therefore during use of the energy storage battery cabinet 1, one of two outermost battery cell layer groups 200 needs to bear the pressure of the other battery cell layer group 200. Therefore, by setting the number of the battery cell layer groups 200 to be not greater than 18, the outermost battery cell layer groups 200 can be prevented from being broken by pressure, to cause that the service life of each battery cell layer group 200 is ensured. In addition, the number of battery cell layer groups 200 is not less than two, to cause that the volumetric cell to system rate of the energy storage battery cabinet 1 is increased and the power supply duration of energy storage battery cabinet 1 is prolonged.

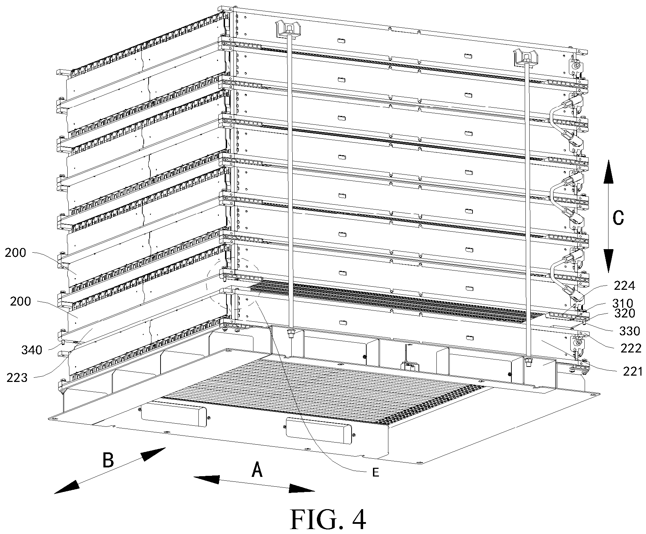

According to some embodiments of the present disclosure, as shown in FIG. 2 and FIG. 4, the at least two battery cell layer groups 200 arranged in the third direction define an overall width of W2, an overall depth of D2, and an overall height of H2, where 500 mm ≤ W2 ≤ 1100 mm, 450 mm ≤ D2 ≤ 1000 mm, and 450 mm ≤ H2 ≤ 2450 mm.

In this way, on one hand, the overall size of the multiple battery cell layer groups 200 is not excessively large, to cause that the battery cell layer groups 200 are suitable for different usage scenarios, and the energy storage battery cabinet 1 using the multiple battery cell layer groups 200 of the present disclosure is also easy to move and disassemble. On the other hand, the overall size of the multiple battery cell layer groups 200 is not excessively small, to cause that the power stored in the multiple battery cell layer groups 200 can satisfy the use in most situations and the endurance is strong.

According to some specific embodiments of the present disclosure, as shown in FIG. 4 to FIG. 6, each battery cell layer group 200 further includes a restraint frame 220, the battery cells 210 in each battery cell layer group 200 are arranged on the restraint frame 220, and the restraint frames 220 of two adjacent battery cell layer groups 200 in the third direction abut against each other.

By configuring the restraint frame 220, multiple battery cells 210 can be fastened using the restraint frame 220, to cause that the structural strength of the restraint frame 220 can be used to assist in improving the structural strength of the battery cells 210. Therefore, the number of battery cell layer groups 200 that can be arranged in the energy storage battery cabinet 1 can be more. For example, the number of battery cell layer groups 200 may be 15, 16, 17, 18, 19, or 20. With such the design, the volumetric cell to system rate of the energy storage battery cabinet 1 is large and the energy density is high.

According to some embodiments of the present disclosure, as shown in FIG. 4 to FIG. 6, the restraint frame 220 includes a first bottom plate 223 and a second bottom plate 224. The first bottom plate 223 and the second bottom plate 224 are arranged spaced away along one of the first direction and the second direction. Two ends of the battery cells 210 in the length direction are respectively supported on the first bottom plate 223 and the second bottom plate 224. An air duct gap is formed between the first bottom plate 223 and the second bottom plate 224.

Through the arrangement of the first bottom plate 223 and the second bottom plate 224, the battery cells 210 can be supported. The first bottom plate 223 and the second bottom plate 224 can guide a gas that enters the air duct gap 110, to improve the heat dissipation efficiency of the gas for the battery cells 210, to cause that the battery cells 210 are less likely to be damaged by heat and the service life of the energy storage battery cabinet 1 is prolonged. In addition, stop steps 225 may be formed on an upper surface of the first bottom plate 223 and an upper surface of the second bottom plate 224, for limiting the battery cells 210 between the first bottom plate 223 and the second bottom plate 224.

According to some specific embodiments of the present disclosure, as shown in FIG. 4 to FIG. 6, the restraint frame 220 further includes a first side plate 221 and a second side plate 222. The first side plate 221 and the second side plate 222 are respectively located at two sides of the battery cell layer group 200. The first side plate 221 and the second side plate 222 are oppositely arranged in the other direction of the first direction and the second direction. Two ends of the first bottom plate 223 are respectively connected to one end of the first side plate 221 and one end of the second side plate 222. Two ends of the second bottom plate 224 are respectively connected to the other end of the first side plate 221 and the other end of the second side plate 222. For the two adjacent battery cell layer groups 200 in the third direction, the first bottom plate 223 of one battery cell layer group 200 abuts against the first side plate 221 and the second side plate 222 of the other battery cell layer group 200, and the second bottom plate 224 of the one battery cell layer group 200 abuts against the first side plate 221 and the second side plate 222 of the other battery cell layer group 200.

In this way, two adjacent battery cell layer groups 200 do not need to directly abut against the battery cells 210, to cause that the probability that the battery cell 210 is broken by force is reduced. In addition, the first side plate 221 and the second side plate 222 are located at two opposite sides of the battery cell layer group 200, to cause that the two adjacent battery cell layer groups 200 can be prevented from being deflected by force and the arrangement of the battery cell layer groups 200 is more stable.

According to some specific embodiments of the present disclosure, as shown in FIG. 4 to FIG. 6, each of the first bottom plate 223 and the second bottom plate 224 is provided with one of a limit bar 310 and a limit hole 320 and each of the first side plate 221 and the second side plate 222 is provided with the other one of the limit bar 310 and the limit hole 320. For two adjacent battery cell layer groups 200 in the third direction, the limit bar 310 of one battery cell layer group 200 is matched with the limit hole 320 of the other battery cell layer group 200.

Through the coordination between the limit hole 320 and the limit bar 310, the position between the adjacent battery cell layer groups 200 can be fixed, and relative rotation between the adjacent battery cell layer groups 200 can be prevented. The positioning accuracy is high, the assembly and electrical connection are more reliable, and the safety is high.

According to some specific embodiments of the present disclosure, as shown in FIG. 4 to FIG. 6, either the limit bars 310 or the limit holes 320 are distributed at two ends of the first bottom plate 223 and two ends of the second bottom plate 224, and the other one of the limit bars 310 and the limit holes 320 are distributed at two ends of the first side plate 221 and two ends of the second side plate 222.

In this way, more fixing points are provided between the adjacent battery cell layer groups 200, to further improve the positioning accuracy between the adjacent battery cell layer groups 200. The assembly and electrical connection is more reliable and a high safety is achieved.

According to some specific embodiments of the present disclosure, as shown in FIG. 4 to FIG. 6, for the two adjacent battery cell layer groups 200 in the third direction, the first side plate 221 of the other battery cell layer group 200 is fastened to the first bottom plate 223 and the second bottom plate 224 of one battery cell layer group 200 by the first fastener 330, the second side plate 222 of the other battery cell layer group 200 is fastened to the first bottom plate 223 and the second bottom plate 224 of the one battery cell layer group 200 by a second fastener 340. The first fastener 330 and the second fastener 340 may be threaded fasteners.

In this way, the relative position between the adjacent battery cell layer groups 200 can be locked, and separation between the adjacent battery cell layer groups 200 can be prevented in a transportation or assembly process. Therefore, the adjacent battery cell layer groups 200 can be integrally disassembled and assembled. Not only a high assembly efficiency is achieved, but also the positioning accuracy between the adjacent battery cell layer groups 200 in the entire transportation and assembly process can be ensured. Therefore, the overall assembly accuracy of the energy storage battery cabinet 1 is high, the assembly and electrical connection are more reliable, and the safety is high.

According to some specific embodiments of the present disclosure, as shown in FIG. 4 to FIG. 6, the first fasteners 330 are distributed at two ends of the first side plate 221, and the second fasteners 340 are distributed at two ends of the second side plate 222.

In this way, multiple fixing points are provided between the relative positions of the adjacent battery cell layer groups 200, the adjacent battery cell layer groups 200 are less likely to be separated, and the positioning accuracy between the adjacent battery cell layer groups 200 can be more reliably ensured. Therefore, the overall assembly accuracy of the energy storage battery cabinet 1 is high, the assembly and electrical connection are more reliable, and the safety is high.

According to some specific embodiments of the present disclosure, as shown in FIG. 4 to FIG. 6, the volume of each battery cell 210 is V1, the number of the battery cells 210 is N, and the volume of the cabinet body 100 is V3, where 35% < (N*V1)/V3 ≤ 50%. A space in the cabinet body 100 other than the space occupied by the battery cells 210 can be configured for arranging units such as a control unit 700, a restraint frame 220, a refrigeration unit 600, and a fire fighting unit.

In this way, a sufficient space is left for arranging other units while the volumetric cell to system rate of the energy storage battery cabinet 1 is increased. The space of the energy storage battery cabinet 1 is more fully utilized, and the volume of the energy storage battery cabinet 1 does not need to be set excessively large, to cause that the energy storage battery cabinet 1 can be conveniently applied to different scenes.

According to some specific embodiments of the present disclosure, as shown in FIG. 2 and FIG. 3, each battery cell layer group 200 further includes a third bottom plate 520 and a fourth bottom plate 530. The third bottom plate 520 and the fourth bottom plate 530 are arranged spaced away along one of the first direction and the second direction. For two adjacent battery cell layer groups 200 in the third direction, the third bottom plate 520 and the fourth bottom plate 530 of one battery cell layer group 200 abut against the battery cells 210 of the other battery cell layer group 200. An air duct gap 110 is formed between the third bottom plate 520 and the fourth bottom plate 530.

In this way, two adjacent battery cell layer groups 200 do not need to directly abut against the battery cells 210, to cause that the probability that a battery cell 210 is broken by force is reduced. In addition, the third bottom plate 520 and the fourth bottom plate 530 are located at two opposite sides of the battery cell layer group 200, to cause that the two adjacent battery cell layer groups 200 can be prevented from being deflected by force and the arrangement of the battery cell layer groups 200 is more stable.

According to some specific embodiments of the present disclosure, as shown in FIG. 2 and FIG. 3, at least one restraint band 500 is provided on one side of the at least two battery cell layer groups 200 in the third direction, two ends of each restraint band 500 are respectively connected to pull rods 510, and each pull rod 510 and the cabinet body 100 are connected to the other side of the at least two battery cell layer groups 200 in the third direction.

The pull rods 510 may extend in the third direction and the pull rods 510 are located at two sides of the battery cell layer group 200 in the first direction or the second direction. In other words, if the pull rods 510 are located at two sides of the battery cell layer group 200 in the first direction, the restraint band 500 may extend in the first direction, and the pull rods 510 can fasten and limit the battery cell layer group 200 in the first direction. If the pull rods 510 are located at two sides of the battery cell layer group 200 in the second direction, the restraint band 500 may extend in the second direction, and the pull rods 510 can fasten and limit the battery cell layer group 200 in the second direction.

Certainly, the number of the restraint bands 500 may be more than one. One restraint band 500 may extend along the first direction, and the pull rods 510 connected to the restraint band are located at two sides of the battery cell layer group 200 in the first direction. The other restraint band 500 may extend along the second direction, and the pull rods 510 connected to the restraint band are located at two sides of the battery cell layer group 200 in the second direction. In this way, the pull rods 510 can simultaneously fasten and limit the battery cell layer group 200 in the first direction and the second direction.

In addition, through the coordination between the restraint band 500 and the pull rod 510, the battery cell layer group 200 can be fixed and limited in the third direction, the position of the battery cell layer group 200 is not susceptible to change, the electrical connection reliability of the battery cells 210 is ensured, and the safety and structural stability of the energy storage battery cabinet 1 are improved. In addition, no fastening structures need to be additionally provided between the at least two battery cell layer groups 200. Therefore, a large space in the energy storage battery cabinet 1 is left for arranging the battery cell layer groups 200. The volumetric cell to system rate can be greatly increased.

According to some specific embodiments of the present disclosure, as shown in FIG. 2 and FIG. 3, the volume of each battery cell 210 is V1, the number of the battery cells 210 is N, and the volume of the cabinet body 100 is V3, where 35% < (N*V1)/V3 ≤ 50%. A space in the cabinet body 100 other than the space occupied by the battery cells 210 can be configured for arranging units such as a control unit 700, a refrigeration unit 600, and a fire fighting unit.

In this way, a sufficient space is left for arranging other units while the volumetric cell to system rate and the energy density of the energy storage battery cabinet 1 is increased. The space of the energy storage battery cabinet 1 is more fully utilized, and the volume of the energy storage battery cabinet 1 does not need to be set excessively large, to cause that the energy storage battery cabinet 1 can be conveniently applied to different scenes.

According to some specific embodiments of the present disclosure, as shown in FIG. 1, the energy storage battery cabinet 1 further includes a refrigeration unit 600. The refrigeration unit 600 is installed in the cabinet body 100 and located at a side of the cabinet body 100 in the second direction. The refrigeration unit 600 is provided with an air outlet and a return air inlet. A heat dissipation air duct 120 communicated with the air outlet is provided on one side of the cabinet body 100 in the third direction. An air duct gap 110 is provided between the battery cells 210 of the two adjacent battery cell layer groups 200 in the third direction. An airflow flows into the heat dissipation air duct 120 from the air outlet, then flows through the at least two battery cell layer groups 200 from the other side in the second direction and the two sides in the first direction, and flows to the return air inlet through the air duct gap 110.

By providing the refrigeration unit 600, a gas in the energy storage battery cabinet 1 is driven to circulate, to cause exchange heat with the gas in the energy storage battery cabinet 1 and reduce the temperature of the gas in the energy storage battery cabinet 1. Therefore, a gas in the low-temperature energy storage battery cabinet 1 can cool and dissipate the battery cells 210 in the energy storage battery cabinet 1. Thermal runaway caused by heat accumulation of the battery cells 210 in the energy storage battery cabinet 1 can be avoided and the safety of the energy storage battery cabinet 1 is improved.

The air duct gap 110 is provided between the battery cells 210 of the two adjacent battery cell layer groups 200, the heat exchange area between the gas in the energy storage battery cabinet 1 and each battery cell 210 is large, and the heat exchange efficiency is improved. In addition, the refrigeration unit 600 is located at one side of the cabinet body 100 in the second direction. Therefore, the refrigeration unit 600 does not affect the arrangement of the battery cell layer groups 200 along the third direction. The number of the battery cell layer groups 200 can be more, to cause that the number of the battery cells 210 can also be more, so as to improve the volumetric cell to system rate of the energy storage battery cabinet 1.

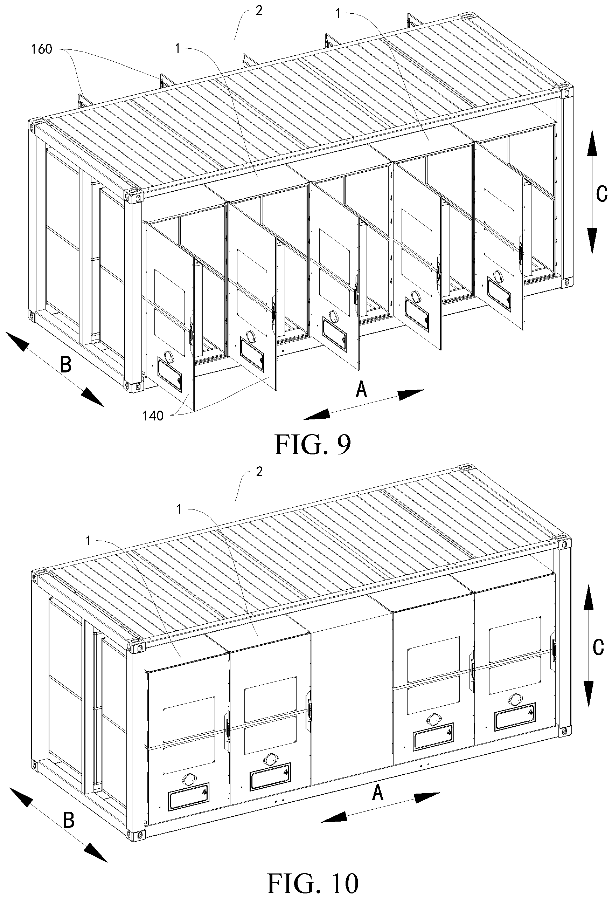

According to some specific embodiments of the present disclosure, as shown in FIG. 1 and FIG. 9, the cabinet body 100 in the second direction is provided with a wiring compartment 130, a first cabinet door 140, and a second cabinet door 150 on one side of the cabinet body along the second direction, and the cabinet body 100 is provided with a third cabinet door 160 on one side of the cabinet body in the second direction. The energy storage battery cabinet 1 further includes a refrigeration unit 600 and a control unit 700. Both the refrigeration unit 600 and the control unit 700 are installed in the cabinet body 100. The refrigeration unit 600 is installed on the first cabinet door 140. The control unit 700 is exposed by opening the first cabinet door 140, the second cabinet door 150 is configured to open and close the wiring compartment 130. At least two battery cell layer groups 200 are put in or taken out from the cabinet body 100 by opening the third cabinet door 160.

In this way, a headroom size in the energy storage battery cabinet 1 can be used to an extreme extent, the volumetric cell to system rate in the energy storage battery cabinet 1 can be improved, and the disassembly and assembly between the refrigeration unit 600, the control unit 700, and the battery cell layer group 200 are not easy to interfere, to cause that the production, maintenance, and replacement are more convenient.

According to some specific embodiments of the present disclosure, as shown in FIG. 1, the first cabinet door 140 and the second cabinet door 150 are arranged along the first direction, and the refrigeration unit 600 and the control unit 700 are arranged along the first direction. In this way, the battery cell layer groups 200 are arranged along the third direction. Therefore, in an actual application, the third direction of the energy storage battery cabinet 1 is generally a vertical direction. By arranging the first cabinet door 140 and the second cabinet door 150 along the first direction, that is, both the first cabinet door 140 and the second cabinet door 150 extending along the third direction, to cause that opening and closing by a user are convenient and subsequent maintenance and overhaul are facilitated.

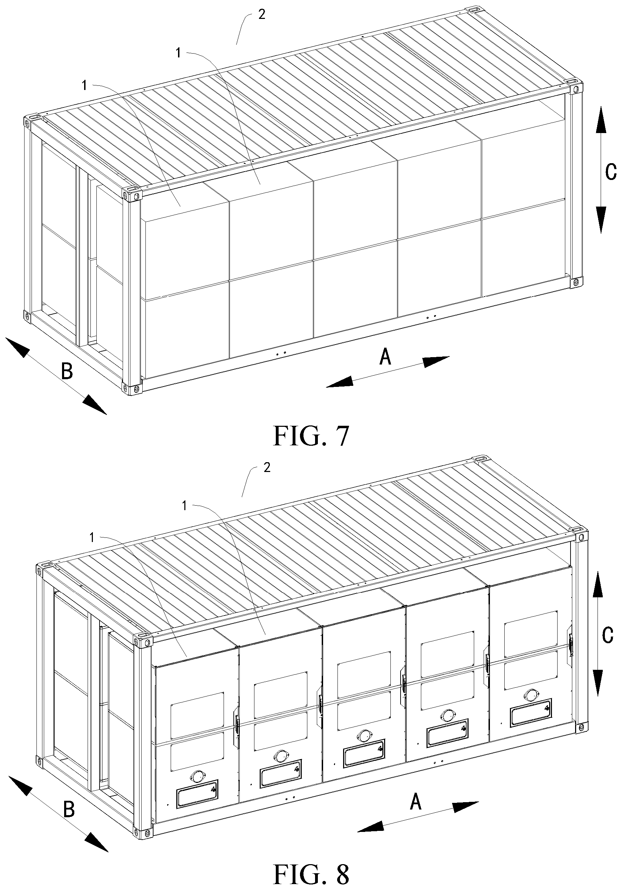

An energy storage system 2 according to an embodiment of the present disclosure is described below with reference to the accompanying drawings. As shown in FIG. 8 to FIG. 10, the energy storage system 2 includes at least one energy storage battery cabinet 1 according to an embodiment of the present disclosure.

According to the energy storage system 2 of the embodiment of the present disclosure, by using the energy storage battery cabinet 1 according to the embodiment of the present disclosure, the battery cell layer groups 200 are stacked, to cause that the battery cell layer groups 200 are mutually limited, thereby having advantages of a high energy density, a large volumetric cell to system rate, and the like.

Other compositions and operations of the energy storage battery cabinet 1 and the energy storage system 2 having same according to the embodiments of the present disclosure are known to those of ordinary skill in the art, and are not described herein again in detail.

In the description of this specification, description of reference terms such as "a specific embodiment" or "a specific example", means including specific features, structures, materials, or features described in the embodiment or example in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. An energy storage battery cabinet (1), comprising:
a cabinet body (100), the cabinet body (100) having a first direction, a second direction, and a third direction which are orthogonal to each other; and
at least two battery cell layer groups (200), the at least two battery cell layer groups (200) being provided in the cabinet body (100) and arranged along the third direction, each battery cell layer group (200) comprising at least one battery cell (210) in each direction of the first direction and the second direction, and two adjacent battery cell layer groups (200) in the third direction abutting against each other so as to limit each other in the third direction.

2. The energy storage battery cabinet (1) according to claim 1, wherein the at least two battery cell layer groups (200) are integrally supported by being in contact with the cabinet body (100) at one side in the third direction.

3. The energy storage battery cabinet (1) according to claim 1 or 2, wherein the first direction is a width direction of the cabinet body (100), the second direction is a depth direction of the cabinet body (100), and the third direction is a height direction of the cabinet body (100).

4. The energy storage battery cabinet (1) according to any one of claims 1 to 3, wherein length directions of the battery cells (210) are arranged along the first direction, thickness directions of the battery cells (210) are arranged along the second direction, and width directions of the battery cells (210) are arranged along the third direction.

5. The energy storage battery cabinet (1) according to any one of claims 1 to 4, wherein a number Z of the battery cells (210) arranged in the first direction satisfies: 1 ≤ X ≤ 2;
a number Y of the battery cells (210) arranged in the second direction satisfies: 1 < Y ≤ 26; and
a number Z of the battery cells (210) arranged in the third direction satisfies: 1 ≤ Z ≤ 16.

6. The energy storage battery cabinet (1) according to any one of claims 1 to 5, wherein a length of each battery cell (210) is L, a thickness of the battery cell (210) is D, and a width of the battery cell (210) is H, wherein (D+H)/L ≤ 0.2.

7. The energy storage battery cabinet (1) according to any one of claims 1 to 6, wherein the length of each battery cell (210) is L, the thickness of the battery cell (210) is D, and the width of the battery cell (210) is H, wherein 400 mm ≤ L ≤ 1200 mm, 10 mm ≤ D ≤ 40 mm, and 60 mm ≤ H ≤ 150 mm.

8. The energy storage battery cabinet (1) according to any one of claims 1 to 7, wherein the length of each battery cell (210) is L, the thickness of the battery cell (210) is D, and the width of the battery cell (210) is H; and
the width of the cabinet body (100) is W1, the depth of the cabinet body (100) is D1, and the height of the cabinet body (100) is H1,
wherein 0.5 ≤ L/W1 < 1; and/or 0.5 ≤ L/D1 < 1.

9. The energy storage battery cabinet (1) according to any one of claims 1 to 8, wherein the width of the cabinet body (100) is W1, the depth of the cabinet body (100) is D1, and the height of the cabinet body (100) is H1, wherein 600 mm ≤ W1 ≤ 1200 mm, 700 mm ≤ D1 ≤ 1250 mm, and 600 ≤ H1 ≤ 2600 mm.

10. The energy storage battery cabinet (1) according to any one of claims 1 to 9, wherein an air duct gap (110) is provided between the battery cells (210) of the two adjacent battery cell layer groups (200) in the third direction.

11. The energy storage battery cabinet (1) according to claim 10, wherein a size of the air duct gap (110) in the third direction ranges from 5 mm to 20 mm.

12. The energy storage battery cabinet (1) according to any one of claims 1 to 11, wherein a number of the battery cell layer groups (200) ranges from 2 to 18.

13. The energy storage battery cabinet (1) according to any one of claims 1 to 12, wherein the at least two battery cell layer groups (200) arranged in the third direction define an overall width of W2, an overall depth of D2, and an overall height of H2, wherein 500 mm ≤ W2 ≤ 1100 mm, 450 mm ≤ D2 ≤ 1000 mm, and 450 mm ≤ H2 ≤ 2450 mm.

14. The energy storage battery cabinet (1) according to any one of claims 1 to 9, wherein battery cells (210) of the two adjacent battery cell layer groups (200) in the third direction abut against each other.

15. The energy storage battery cabinet (1) according to any one of claims 1 to 13, wherein each battery cell layer group (200) further comprises:
a restraint frame (220), battery cells (210) in each battery cell layer groups (200) are arranged in the restraint frame (220), restraint frames (220) of the two adjacent battery cell layer groups (200) in the third direction abut against each other.

16. The energy storage battery cabinet (1) according to claim 15, wherein the restraint frame (220) comprises:
a first bottom plate (223); and
a second bottom plate (224), the second bottom plate (224) and the first bottom plate (223) being arranged spaced away along one of the first direction and the second direction, two ends of the battery cells in the length direction being respectively supported on the first bottom plate (223) and the second bottom plate (224), and an air duct gap (110) being formed between the first bottom plate (223) and the second bottom plate (224).

17. The energy storage battery cabinet (1) according to claim 16, wherein the restraint frame (220) further comprises:
a first side plate (221); and
a second side plate (222), the second side plate (222) and the first side plate (221) being respectively located at two sides of the battery cell layer group (200), the first side plate (221) and the second side plate (222) being arranged opposite to each other in the first direction and the second direction, two ends of the first bottom plate (223) being respectively connected to one end of the first side plate (221) and one end of the second side plate (222), and two ends of the second bottom plate (224) being respectively connected to the other end of the first side plate (221) and the other end of the second side plate (222),
wherein for two adjacent battery cell layer groups (200) in the third direction, the first bottom plate (223) of one battery cell layer group (200) abuts against the first side plate (221) and the second side plate (222) of the other battery cell layer group (200), and the second bottom plate (224) of the one battery cell layer group (200) abuts against the first side plate (221) and the second side plate (222) of the other battery cell layer group (200).

18. The energy storage battery cabinet (1) according to claim 17, wherein each of the first bottom plate (223) and the second bottom plate (224) is provided with one of a limit bar (310) and a limit hole (320) and each of the first side plate (221) and the second side plate (222) is provided with the other one of the limit bar (310) and the limit hole (320), wherein for the two adjacent battery cell layer groups (200) in the third direction, the limit bar (310) of one battery cell layer group (200) is matched with the limit hole (320) of the other battery cell layer group (200).

19. The energy storage battery cabinet (1) according to claim 18, wherein either the limit bars (310) or the limit holes (320) are distributed at two ends of the first bottom plate (223) and two ends of the second bottom plate (224); and
the other one of the limit bars (310) and the limit holes (320) are distributed at two ends of the first side plate (221) and two ends of the second side plate (222).

20. The energy storage battery cabinet (1) according to any one of claims 17 to 19, wherein for two adjacent battery cell layer groups (200) in the third direction, the first side plate (221) of the other battery cell layer group (200) is fastened to the first bottom plate (223) and the second bottom plate (224) of the one battery cell layer group (200) by first fasteners (330), and the second side plate (222) of the other battery cell layer group (200) is fastened to the first bottom plate (223) and the second bottom plate (224) of the one battery cell layer group (200) by second fasteners (340).

21. The energy storage battery cabinet (1) according to claim 20, wherein the first fasteners (330) are distributed at two ends of the first side plate (221), and the second fasteners (340) are distributed at two ends of the second side plate (222).

22. The energy storage battery cabinet (1) according to any one of claims 1 to 21, wherein a volume of each battery cell (210) is V1, a number of the battery cells (210) is N, and a volume of the cabinet body (100) is V3, wherein 35% < (N*V1)/V3 ≤ 50%.

23. The energy storage battery cabinet (1) according to any one of claims 1 to 22, wherein each battery cell layer group (200) further comprises:
a third bottom plate (520); and
a fourth bottom plate (530), the fourth bottom plate (530) and the third bottom plate (520) being arranged spaced away along one of the first direction and the second direction, for the two adjacent battery cell layer groups (200) in the third direction, the third bottom plate (520) and the fourth bottom plate (530) of one of the battery cell layer groups (200) abutting against battery cells of the other battery cell layer group (200), and an air duct gap (110) being formed between the third bottom plate (520) and the fourth bottom plate (530).

24. The energy storage battery cabinet (1) according to claim 23, wherein at least one restraint band (500) is provided on one side of the at least two battery cell layer groups (200) in the third direction, two ends of each restraint band (500) are respectively connected to pull rods (510), and each pull rod (510) and the cabinet body (100) are connected to the other side of the at least two battery cell layer groups (200) in the third direction.

25. The energy storage battery cabinet (1) according to any one of claims 1 to 24, further comprising:
a refrigeration unit (600), the refrigeration unit (600) being installed in the cabinet body (100) and located at one side of the cabinet body (100) in the second direction, the refrigeration unit (600) being provided with an air outlet and a return air inlet, a side of the cabinet body (100) in the third direction being configured with a heat dissipation air duct (120) communicated with the air outlet, and an air duct gap (110) being provided between the battery cells (210) of two adjacent battery cell layer groups (200) in the third direction,
wherein an airflow flows into the heat dissipation air duct (120) from the air outlet, then flows through the at least two battery cell layer groups (200) from the other side in the second direction and two sides in the first direction, and flows to the return air inlet through the air duct gap (110).

26. The energy storage battery cabinet (1) according to any one of claims 1 to 25, wherein the cabinet body (100) is provided with a wiring compartment (130), a first cabinet door (140), and a second cabinet door (150) on one side in the second direction, and the cabinet body (100) is provided with a third cabinet door (160) on the other side in the second direction; and
the energy storage battery cabinet (1) further comprises a refrigeration unit (600) and a control unit (700), and both the refrigeration unit (600) and the control unit (700) are installed in the cabinet body (100),
wherein the refrigeration unit (600) is installed on the first cabinet door (140), the control unit (700) is exposed by opening the first cabinet door (140), the second cabinet door (150) is configured to open and close the wiring compartment (130), and the at least two battery cell layer groups (200) are put in or taken out from the cabinet body (100) by opening the third cabinet door (160); and
the first cabinet door (140) and the second cabinet door (150) are arranged along the first direction, and the refrigeration unit (600) and the control unit (700) are arranged along the first direction.

27. An energy storage system (2), comprising at least one energy storage battery cabinet (1) according to any one of claims 1 to 26.
